# EUROPEAN PATENT SPECIFICATION

(11) **EP 2 552 169 B1**
(45) Date of publication and mention of the grant of the patent: **23.06.2021**
(21) Application number: 11741866.5
(22) Date of filing: 27.01.2011
(51) Int. Cl.: H04L 5/00, H04W 72/12

(54) **METHOD FOR SENDING SOUNDING REFERENCE SIGNALS (SRS), TRIGGER METHOD AND DEVICE THEREOF**
VERFAHREN ZUM SENDEN VON KLANGREFERENZSIGNALEN SOWIE AUSLÖSEVERFAHREN UND -VORRICHTUNG DAFÜR
PROCÉDÉ POUR L'ENVOI DE SIGNAUX DE RÉFÉRENCE SONORES (SRS), PROCÉDÉ DE DÉCLENCHEMENT ET DISPOSITIF CORRESPONDANT

(30) Priority: 11.02.2010 CN 201010111748
(43) Date of publication of application: 30.01.2013
(73) Proprietor: China Academy of Telecommunications Technology, Hai Dian District Beijing 100191 (CN)
(72) Inventor: PAN, Xueming, Beijing 100083 (CN); MIAO, Deshan, Beijing 100083 (CN); CHEN, Wenhong, Beijing 100083 (CN)
(74) Representative: Lantos, Mihaly
(86) International application number: PCT/CN2011/070723
(87) International publication number: WO 2011/097995

(56) References cited:
- WO-A2-2009/087182
- WO-A2-2010/011083
- WO-A2-2011/068995
- CN-A- 101 299 871
- CN-A- 101 426 268
- US-A1- 2009 181 687
- US-A1- 2009 268 693
- CATT: "SRS enhancements for LTE-A UL transmission", 3GPP DRAFT; R1-100075, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Valencia, Spain; 20100118, 12 January 2010 (2010-01-12), XP050417818, [retrieved on 2010-01-12]
- NOKIA SIEMENS NETWORKS ET AL: "Channel sounding enhancements for LTE-Advanced", 3GPP DRAFT; R1-094653, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050389058, [retrieved on 2009-11-02]
- 3GPP: "3rd Generation Partnership Project; Technical Specification Group Radio Access Network; Evolved Universal Terrestrial Radio Access (E-UTRA); Physical layer procedures (Release 8)", 3GPP DRAFT; DRAFT36213-880, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 1 September 2009 (2009-09-01), XP050388082,
- HUAWEI: "TPC for PUSCH and PUCCH on format3/3A", 3GPP DRAFT; R1-083043 TPC FOR PUSCH AND PUCCH ON FORMAT3(3A), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jeju, South Korea; 20080818 - 20080822, 12 August 2008 (2008-08-12), XP050596939,

## Description

### Field of the Invention

The present invention relates to the field of wireless communication technology, in particular to the method for triggering the sending of uplink Sounding Reference Signals (SRS), and the method for sending the SRS signals and device thereof.

### Background of the Invention

In a Long Term Evolution-Advanced (LTE-A) system, as the uplink Mult-Input Mult-Output (MIMO) supports multiple antennas transmission, for better performing the evaluation with channel quality indicator (CQI) and the uplink pre-coding selection, it is required to support the independent SRS transmission of User Equipment (UE) through the multiple antennas.

In a Release-8 (REL-8) system, the SRS resources are allocated periodically, the SRS of each UE are sent periodically, and the sending parameters (such as period, sub-frame, frequency band and frequency hopping configuration) are configured by the high layer signal radio resource control (RRC) information. After receiving the commands of the base station, the UE starts sending the SRS. Before receiving the commands of closing the SRS, the UE continuously sends the SRS, therefore, the SRS configuration slowly varies.

As more requirements are put forward for the SRS resources in the LET-A system, the pure semi-static configuration cannot meet the requirements. Therefore, the dynamic configuration for the SRS has been made available in this industry, namely, the configuration through a physical downlink control channel (PDCCH) (a dedicated control channel). One typical method is to add one bit during the uplink scheduling of the UE to trigger the sending of the SRS, and another is to independently send a PDCCH signal for instructing the UE to send the SRS. In the former method, the SRS configuration parameters are determined by the high-layer signaling, and the PDCCH signal is only used for triggering the sending of the SRS; in the latter method, the SRS configuration parameters are directly set in the PDCCH instructions. The two methods are to realize an independent configuration to the UE.

In consideration of the ability to be realized and the efficiency of the system, and in the process of realizing the objects of the present invention, the at least the following problems existing in the prior art were found:
In one aspect, the method for triggering a single UE to send the SRS by employing PDCCH signal requires large resource consumption, especially when a plurality of UEs need to be triggered for sending SRS by employing this method, PDCCH signal needs to use a lot of resources;
In a further aspect, the method for triggering a UE to send SRS by employing uplink scheduling signal leads to conflict with other UEs with respect to resource allocation when the UE sends the SRS. Even if thus conflict can be avoided, the resource allocation is to be limited to a great extent.

In the document CATT: "SRS enhancements for LTE-A UL transmission", 3GPP DRAFT; R1-100075, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Valencia, Spain; 2010-01-12, XP050417818, in its Section "One-shot SRS" in its paragraph 3, this document introduces an SRS Activation bit in DCI format for PUSCH to send a SRS request to UE, and further discloses "*A new PDCCH format similar to PDCCH Format 3A can be configured to schedule multiple UEs SRS at the same time*". However, the publication fails to disclose, teach or suggest carrying indication information for multiple UEs in one PDCCH signal and pays no attention in saving resource consumption.

In addition, the document US 2009/268693 A1 fails to disclose the technical features indicated by *italics* in the previous paragraphs and cannot cure the deficiencies of this previous document.

The document: NOKIA SIEMENS NETWORKS ET AL: "Channel sounding enhancements for LTE-Advanced", 3 GPP, MOBILE COMPETENCE CENTRE; 650, ROUTE DES LUCIOLES; F-06921 SOPHIA-ANTIPOLIS CEDEX; FRANCE, no. Jeju; 2009-11-09, XP050389058 fails to disclose, teach or suggest carrying indication information for multiple UEs in one PDCCH signal.

The document EP 2 306 659 A2 with its paragraphs [0029-0032], discloses "transmitting, at a base station, reference signal configuration information indicating the configuration of reference signals to be transmitted in uplink to a user equipment through a uplink grant PDCCH". However, such reference signal configuration information is not equivalent to indication information for instructing whether a UE is required to send SRS, and the technical solution of this document does not mention the triggering of sending SRS.

The document WO 2011/068995 A2 relates to the allocation of SRS resources, while does not mention any indication information for instructing whether UE is required to send SRS. 3GPP draft; "TPC for PUSCH and PUCCH on format 3/3A" by Huawei, August 112, 2008, R1-083043 provides several proposals: 1) Format 3/3A is bundled to only one TPC-RNTI, whatever for PUSCH or PUCCH; 2) distinguish TCP from format 3/3A for PUSCH and that for PUCCH according to the corresponding UE logic for each subframe.

### Summary of the Invention

The embodiments of the present invention provide a method for triggering the sending of SRS, a corresponding method for sending the SRS, a corresponding base station and a corresponding user equipment as defined in accompanying claims, for solving the problem in the prior art that the existing mechanism for sending the SRS cannot instruct a plurality of UEs to send the SRS.

In the above embodiments of the present invention, since the PDCCH signal sent by the base station carries the corresponding identifier information of a plurality of UEs and the corresponding indication information of the UEs, the PDCCH signal can instruct a plurality of UEs corresponding to the identifier information to send the SRS at a time. Accordingly, the UE, after receiving the PDCCH signal, can trigger the sending of the SRS according to the indication information in the PDCCH signal. It can be seen that the above embodiments realize the effect that a PDCCH signal triggers a plurality of UEs to send the SRS. Of course, products that employ the embodiments of the present do not necessarily need to have all aforesaid advantages at the same time.

The invention will now be described in connection with preferable embodiments thereof, wherein reference will be made to the accompanying drawings.

### Brief Description of the Drawings

Fig.1 is a process diagram of the method for triggering the sending of the SRS and sending the SRS provided in the embodiments of the present invention;
Fig.2 and Fig.3 are schematic diagrams of the configuration parameters of the sub-frame used for transmitting the SRS in TDD system provided in the embodiments of the present invention;
Fig.4 is a schematic structure diagram of the base station apparatus provided in the embodiment I of the present invention;
Fig.5 is a schematic structure diagram of the UE provided in the embodiment I of the present invention;
Fig.6 is a process diagram of the method for triggering the sending of the SRS and sending the SRS provided in the embodiment I of the present invention;
Fig.7 is a schematic diagram of the base station apparatus provided in the embodiment I of the present invention.

### Detailed Description of Preferred Embodiments

The technical solution in the embodiments of the present invention is explained in a clear and complete way with reference to the drawings in the embodiments of the present invention. Obviously, the embodiments described hereinbelow are only a plurality of embodiments of the present invention rather than all. All other embodiments gained by those skilled in the art on the basis of the embodiments in the present invention without any creative work shall fall within the protection scope of the present invention that is defined by the appended claims.

### Embodiment I

In the embodiment I, to ease the SRS resource restriction, the uplink SRS can be sent in a non-periodic way, namely, the base station sends a trigger signal to cause the UE to send the SRS. Besides, a control signal can be sent to instruct a plurality of UEs to send the SRS.

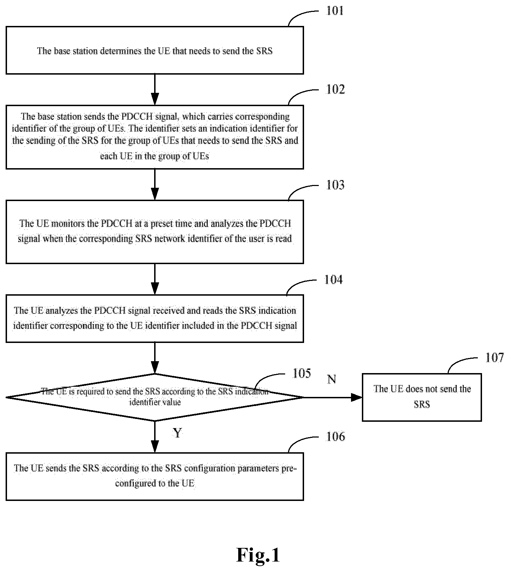

Fig.1 presents the procedure that the base station triggers the sending of the SRS provided in the embodiment I of the present invention and the procedure that the UE is triggered to send the SRS, wherein, the SRS configuration parameters can be configured to the UE via high layer signaling in advance and can comprises corresponding signal sequence, frequency band and other information. The procedure can comprise the following steps:
Step 101: the base station determines the UE that needs to send the SRS.

In this step, the high layer signaling can determine which UE(s) needs to send the SRS according to the needs of the UEs or the data transmission mode and determine the identification of the UE(s). A plurality of (e.g. a group of) UEs that need to send the SRS are allowed.

Step 102: the base station sends the PDCCH signal, which carries corresponding identifier of the group of UEs. The identifier sets an indication identifier for the sending of the SRS for the group of UEs that needs to send the SRS determined in step 101 and each UE in the group of UEs. Different indication identifier values for the sending of the SRS are employed to indicate whether to require the UE to send the SRS.

The indication identifier for the sending of the SRS included in the PDCCH signal can be 1 bit so as to reduce PDCCH signal overhead. If a 1 bit identifier is utilized, 0 can be set to indicate that the UE is required to send the SRS and 1 to indicate that the UE is not required to send the SRS, and vice versa.

Thus, the procedure that a PDCCH signal instructs a plurality of (e.g. a group of) UEs to send the SRS is completed.

In consideration that the UE receives the PDCCH signal in a blind detection way, i.e. the UE generally does not know the format of the information transmitted by the current downlink control information (DCI) and the position of the information needed by the UE. But the UE knows which information is expected, for example, currently the UE possibly expects the indication information for the sending of the SRS. The UE performs cyclic redundancy check (CRC) between radio network temporary identity (X-RNTI) and control channel element (CCE), namely the basic element of DCI. If the CRC is successful, the UE knows the information is in need and corresponding DCI format, thus DCI content. Therefore, in the embodiment I, the base station can employ SRS-RNTI as the ID number of PDCCH signal for indicate a group of UEs that the PDCCH signal is used for instructing the UE to send the SRS, thus enhancing the blind detection efficiency of the UE for PDCCH, wherein, the SRS-RNTI can correspond to a group of UEs.

In consideration that the PDCCH space can be divided into common search space and specific search space for the purpose of enhancing the blind detection efficiency of the UE, in the embodiment I, the base station sends the PDCCH signal for instructing the UE to send the SRS by utilizing the common search space, so that the UE can detect the PDCCH signal in the common search space and the blind detection of the UE can be simplified.

Furthermore, to reduce blind detection times, in the embodiment I, the base station builds the PDCCH for instructing the UE to send the SRS according to the length of the existing PDCCH signal.

A typical PDCCH DCI format is shown as follows:
Providing that the effective information bit of the DCI is 20bit and can support 20 UEs. 20 indexes of user (user identification) respectively correspond to one of the sequence numbers from 1 to 20 and the corresponding information bit of each sequence number can be either 1 or 0, wherein, 1 represents that the UE is triggered to send the SRS, while 0 represents that the UE is not triggered to send the SRS. The UE, at the time of sending the DCI, can perform CRC for the DCI and perform XOR for the check information and SRS-RNTI to generate new check bit, the effective information bit and the check bit together forming the final information bit of the DCI, before performing channel coding and sending data via mapping.

The UE triggers the sending of the SRS according to the PDCCH signal sent by the base station, which comprises:
Step 103: the UE monitors the PDCCH at a preset time and analyzes the PDCCH signal when the corresponding SRS network identifier of the user is read.

In this step, according to the way that the base station sends the PDCCH signal, the UE detects whether the ID of any PDCCH signal is SRS-RNTI in the common search area during the blind detection of the PDCCH. If yes, step 104 is carried out.

The embodiment I is described by taking that the UE is one of a group of UEs identified by the SRS-RNTI in the PDCCH signal as an example.

Step 104: the UE analyzes the PDCCH signal received and reads the SRS indication identifier corresponding to the UE identifier included in the PDCCH signal.

Step 105: if the UE is required to send the SRS according to the SRS indication identifier value, step 106 is followed, or step 107 is followed.

Step 106: the UE sends the SRS according to the SRS configuration parameters pre-configured to the UE.

Step 107: the UE does not send the SRS.

In the above procedure, the UE can send the SRS according to the resources reserved by the system for the sending of the SRS, and to reduce conflict between resources, the base station can group the users according to the user service conditions, transmission mode and the like, allocate resources, and then inform each UE via high layer signaling. Preferably, the resources reserved by the system for a group of UEs indicated by the PDCCH signal are mutually orthogonal.

In the above procedure, the UE can send the SRS according to the time sequence provided by the system. For example, after receiving the PDCCH at the nth sub-frame, the UE sends the SRS at the kth sub-frame after the nth sub-frame. The k can be determined by protocol and k should be a value that: in one aspect, ensures the time delay of the UE to receive and analyze the PDCCH and the time delay for the processing of the SRS that need to be reported to the greatest extent; in a further aspect, prevent the k from conflict with other positions for sending information as the protocol possibly appoints other positions for information.

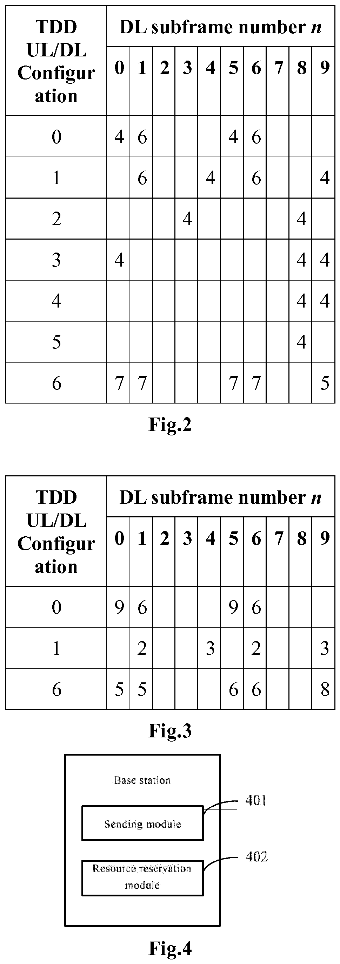

In the implementation of the embodiment I, for the UEs in frequency division duplexing (FDD), the SRS can be sent at the n+4th sub-frame, wherein, n represents the sub-frame that receives the PDCCH signal; while for the UEs in time division duplexing (TDD), the SRS can be sent at the n+kth sub-frame, wherein, n represents the sub-frame that receives the PDCCH. K value can varies according to the different time slot configuration types. Fig.2 and Fig.3 respectively show the values of k under different time slot configuration types in the TDD system.

As shown in Fig.2, according to the different time slot configuration (TDD UL/DL Configuration in Fig.2) types, when the sub-frame that receives the PDCCH signal is DL sub-frame number n, the number in the table is the value of the k. For example, if the TDD UL/DL (uplink/downlink) Configuration is 0 and the sub-frame that receives the PDCCH signal is sub-frame 0, k=4; if the sub-frame that receives the PDCCH signal is sub-frame 1, k=6; and the like.

In another preferred embodiment of the present invention, the PDCCH signal further include SRS configuration parameters, thus the base station can set the parameters for the sending of the SRS for the UEs while triggering a plurality of UEs to send the SRS via a PDCCH signal, so that the UEs can send the SRS according to the parameters, thus realizing the dynamic configuration of the SRS configuration parameters.

Based on the same technical concepts, the embodiment I of the present invention also provide a base station apparatus and a UE respectively.

As shown in Fig.4, the base station provided in the embodiment I of the present invention comprises:
A sending module 401 for sending PDCCH signal, which carries corresponding identifier information of a plurality of user equipments and corresponding indication information of a plurality of user equipments that are previously mentioned for indicating the sending of the SRS. The indication information is used for instructing corresponding user equipment to either send the SRS or not.

The sending module 401 can employ X-RNTI of SRS as the indication information corresponding to a plurality of UEs; and can also send the PDCCH signal in the common search space of the PDCCH.

The indication information for the sending of the SRS sent by the sending module 401 is a 1 bit indication identifier.

The PDCCH signal sent by the sending module 401 also includes the SRS configuration parameters, which can comprise signal sequence and frequency band information.

The abovementioned base station can also comprise:
A resource reservation module 402 for reserving the resources for the sending of the SRS for a plurality of UEs respectively or indicating the resources for the sending of the SRS respectively reserved for a plurality of UEs to the aforesaid UEs before the sending module 401 sends the PDCCH signal, wherein, the resources respectively reserved for a plurality of UEs can be mutually orthogonal.

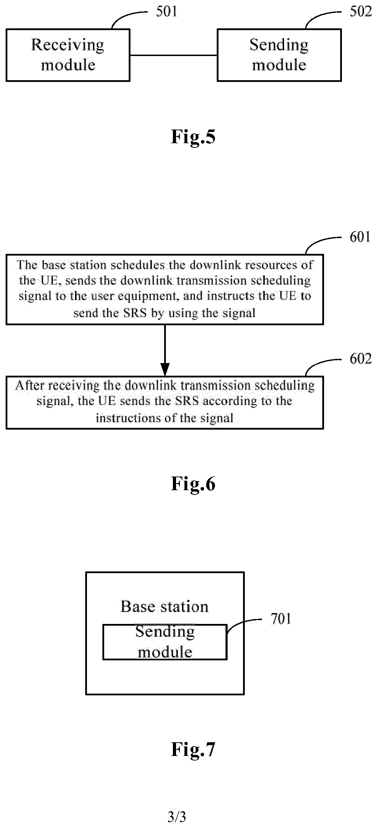

As shown in Fig.5, the UE provided by the embodiment I of the present invention can comprises:
A receiving module 501, which is used for receiving the PDCCH signal when the UE is the one corresponding to the indication information in the PDCCH corresponding to a plurality of UEs; and the PDCCH signal contains the SRS sending indication information corresponding to the UE. When monitoring the PDCCH, the module can search the PDCCH in the public search space;
A sending module 502, which is used for sending the SRS when the SRS sending indication information in the PDCCH signal received by the receiving module 501 instructs the UE to send the SRS. Preferably, the sending module can send the SRS either according to the pre-configured SRS sending configuration information, or by using the resources reserved for the UE for sending the SRS.

The sending module 502 can send the SRS through the nth sub-frame after receiving the sub-frames of the PDCCH signal, wherein, the n is a default value, as shown in Fig.2 and 3.

As mentioned above, the PDCCH signal sent by the base station contains the SRS sending indication corresponding to a plurality of UEs, so as to instruct the UEs to send the SRS through one PDCCH signal. Correspondingly, after receiving the PDCCH signal, the instructed UEs trigger the sending of the SRS according to the SRS sending indication contained in the PDCCH signal. It can be seen that the embodiment I achieves the effect of triggering a plurality of UEs to send the SRS by sending a PDCCH signal.

### Embodiment II

In the embodiment II that is an example useful for understanding the present invention, the network side can configure the SRS configuration parameters to the UE. During the scheduling of the UE, the network side can instruct the UE to send the SRS by sending a downlink transmission scheduling signal.

As shown in Fig.6, the sending process of the SRS provided by the embodiment II can comprise:
Step 601: the base station schedules the downlink resources of the UE, sends the downlink transmission scheduling signal to the user equipment, and instructs the UE to send the SRS by using the signal.
Step 602: after receiving the downlink transmission scheduling signal, the UE sends the SRS according to the instructions of the signal.

In the aforesaid process, the base station instructs the UE to send the SRS through a downlink transmission scheduling signal in an explicit or implicit way.

If in an explicit way, the base station can carry the indication information for instructing the UE to send the SRS signal in a downlink transmission signal. Preferably, the indication information can be a 1-bit indication identifier, and the specific meanings of the identifier value can be indicated by the system, for example, if the indication identifier is 1, it means that the UE is required to send the SRS; if the indication identifier is 0, it means that the UE is not required to send the SRS. In the specific implementation, the DL grant can carry an indication identifier for instructing the UE to send the SRS.

If in an implicit way, the downlink transmission scheduling signal can carry other information according to the pre-designation by the system, or that whether the UE needs to send the SRS can be instructed through the combination of other information, for example, the information bit of the localized virtual resource block/ distributed virtual resource block (LVRB/DVRB) is used for instructing the triggering of SRS. If the information bit indicates the LVRB, the sending of the SRS is triggered.

Preferably, to reduce the blind detection times of the downlink transmission scheduling signal by the UE, the downlink transmission scheduling signal can adopt the existing PDCCH format. Based on the same technical conceptions, the embodiment II of the present invention provides a base station apparatus.

As shown in Fig.7, the base station can comprise:
a sending module 701, which is used for sending the downlink transmission scheduling signal, wherein, the signal carries the indication information for instructing the UE to send the SRS.

The indication information sent by the sending module 701 can be either a 1-bit indication identifier, or an information bit of the LVRB/DVRB, and if the information bit indicates the LVRB, it means the UE is instructed to send the SRS.

As mentioned above, the UE is instructed to send the SRS through the downlink transmission scheduling signal, which enables the UE to send the uplink SRS when performing the downlink transmission, thus being beneficial for better supporting the beam forming, downlink non-codebook and other transmission forms. However, in the prior art, the UE is triggered to send the SRS by the uplink scheduling signal which can't be used for the downlink transmission by the UE.

With the description of the preferred embodiments hereinabove, those skilled in the art can clearly understand that the present invention can be realized with the aid of software and necessary commonly used hardware platforms, or the aid of hardware of course, but the former is a preferred embodiment in most cases. Based on this understanding, the technical proposal of the present invention or the part contributing to the prior art can be reflected in the form of a software product, which is saved in a memory medium comprising instructions to enable a terminal equipment, which could be a cell phone, a personal computer, a server or a network device, to carry out the methods for each embodiment of the present invention.

The above described are only the preferred embodiments of the present invention, and it is to be noted that those of ordinary skill in the art can also make a plurality of improvements without departing from the scope of the present invention as defined by the appended claims.

## Claims

1. A method for triggering sending of a sounding reference signal, SRS, comprising:
sending (102), by a base station, a physical downlink control channel, PDCCH, signal,
**characterized in that**,
the PDCCH signal carries identifier information corresponding to a plurality of user equipments, UEs, and carries a plurality of pieces of indication information corresponding to the plurality of UEs, wherein each of the plurality of pieces of indication information is for instructing whether the corresponding UE is required to send the SRS, and the identifier information is a SRS radio network temporary identifier,
each of the plurality of pieces of indication information corresponding to the plurality of UEs is a 1-bit indication.

2. The method of claim 1, **characterized in that**, the base station sends the PDCCH signal in a common search space of the PDCCH.

3. The method of claim 1, **characterized in that**, before sending the PDCCH signal, the base station reserves a resource for sending the SRS for each of the plurality of UEs.

4. The method of any of claim 1 to 3, **characterized in that**, the PDCCH signal also carries SRS configuration parameters.

5. A method for sending a sounding reference signal, SRS, **characterized in that**, the method comprises
receiving a physical downlink control channel, PDCCH, signal by a User Equipment, UE, wherein the PDCCH signal carries identifier information corresponding to a plurality of user equipments, UEs, comprising the UE, and the PDCCH signal carries a plurality of pieces of indication information corresponding to the plurality of UEs, and containing indication information corresponding to the UE, wherein each of the plurality of pieces of indication information is for instructing whether the corresponding UE is required to send the SRS, and the identifier information is a SRS radio network temporary identifier; and
if the indication information corresponding to the UE instructs the UE to send the SRS, sending (106), by the UE, the SRS according to pre-configured SRS sending configuration information, wherein each of the plurality of pieces of indication information is a 1-bit indication.

6. The method of claim 5, **characterized in that**, the UE sends the SRS through the nth sub-frame after receiving the sub-frames of the PDCCH signal, wherein, the n is a default value.

7. The method of claim 6, **characterized in that**, for a time division duplex, TDD, system, the n is set according to the time slot, TS, configuration types of the TDD system.

8. The method of claim 5, **characterized in that**, the UE searches the PDCCH in a common search space of the PDCCH.

9. A base station, comprising:
a sending module (401), for sending a physical downlink control channel, PDCCH signal, **characterized in that**,
the PDCCH signal carries identifier information corresponding to a plurality of user equipments, UEs, and carries a plurality of pieces of indication information corresponding to the plurality of UEs, wherein each of the plurality of pieces of indication information is for instructing whether the corresponding UE is required to send the SRS, and the identifier information corresponding to the plurality of UEs is a SRS radio network temporary identifier,
each of the plurality of pieces of indication information corresponding to the plurality of UEs is a 1-bit indication.

10. The base station of claim 9, **characterized in that**, the sending module (401) is specifically adapted for sending the PDCCH signal in a common search space of the PDCCH.

11. The base station of claim 9, further comprising:
a resource reservation module (402), for, before the sending module (401) sends the PDCCH signal, reserving a resource for sending the SRS for each of the plurality of UEs.

12. The base station of any of claim 9-11, **characterized in that**, the PDCCH signal carries SRS configuration parameters.

13. A User Equipment, UE, **characterized in that**, the UE comprises:
a receiving module (501), for receiving a physical downlink control channel, PDCCH signal by the UE, wherein the PDCCH carries identifier information corresponding to a plurality of user equipments, UEs, comprising the UE, and the PDCCH signal carries a plurality of pieces of indication information corresponding to the plurality of UEs, and containing indication information corresponding to the UE, wherein each of the plurality of pieces of indication information is for instructing whether the corresponding UE is required to send the SRS, and the identifier information is a SRS radio network temporary identifier; and
a sending module (502), for sending, by the UE, the SRS according to pre-configured SRS sending configuration information if the indication information corresponding to the UE instructs the UE to send the SRS,
wherein each of the plurality of pieces of indication information is a 1-bit indication.

14. The UE of claim 13, **characterized in that**, the sending module (502) is specifically adapted for sending the SRS through the nth sub-frame after receiving the sub-frames of the PDCCH signal, wherein, the n is a default value.

## Patentansprüche

1. Verfahren zum Auslösen des Sendens eines Tonreferenzsignals, SRS, umfassend:
Senden (102) durch eine Basisstation eines physischen Abwärtsverbindungssteuerkanals, PDCCH, -Signals,
**dadurch gekennzeichnet, dass**
das PDCCH-Signal Identifizierungsinformationen, die einer Vielzahl von Benutzergeräten, UEs, entsprechen, und eine Vielzahl von Teilen von Anzeigeinformationen, die der Vielzahl von UEs entsprechen, trägt, wobei jede der Vielzahl von Teilen von Anzeigeinformationen zum Anweisen dient, ob das entsprechende UE zum Senden des SRS erforderlich ist, und die Identifizierungsinformation eine temporäre Kennung des SRS-Funknetzwerks ist;
jede der Vielzahl von Teilen von Anzeigeinformationen, die der Vielzahl von UEs entsprechen, eine 1-Bit-Anzeige ist.

2. Verfahren nach Anspruch 1, **dadurch gekennzeichnet, dass** die Basisstation das PDCCH-Signal in einem gemeinsamen Suchraum des PDCCH sendet.

3. Verfahren nach Anspruch 1, **dadurch gekennzeichnet, dass** die Basisstation vor dem Senden des PDCCH-Signals eine Ressource zum Senden des SRS für jede der Vielzahl von UEs reserviert.

4. Verfahren nach einem der Ansprüche 1 bis 3, **dadurch gekennzeichnet, dass** das PDCCH-Signal auch SRS-Konfigurationsparameter trägt.

5. Verfahren zum Senden eines Tonreferenzsignals, SRS, **dadurch gekennzeichnet, dass** das Verfahren umfasst:
Empfangen eines physischen Downlink-Steuerkanals, eines PDCCH-Signals durch ein Benutzergerät, UE, wobei das PDCCH-Signal Identifizierungsinformationen trägt, die einer Vielzahl von Benutzergeräten, UEs, die das UE umfassen, entsprechen und das PDCCH-Signal eine Vielzahl von Anzeigeinformationen entsprechend der Vielzahl von UEs trägt und Anzeigeinformationen entsprechend dem UE enthält, wobei jede der Vielzahl von Teilen von Anzeigeinformationen zum Anweisen dient, ob das entsprechende UE zum Senden des SRS erforderlich ist, und die Identifizierungsinformationen eine temporäre Kennung des SRS-Funknetzwerks ist; und
Senden (106) durch das UE den SRS gemäß vorkonfigurierten SRS-Sendekonfigurationsinformationen, wenn die dem UE entsprechenden Anzeigeinformationen das UE anweisen, den SRS zu senden,
wobei jedes der Vielzahl von Teilen von Anzeigeinformationen eine 1-Bit-Anzeige ist.

6. Verfahren nach Anspruch 5, **dadurch gekennzeichnet, dass** das UE den SRS durch den n-ten Teilrahmen sendet, nachdem es die Teilrahmen des PDCCH-Signals empfangen hat, wobei n ein Standardwert ist.

7. Verfahren nach Anspruch 6, **dadurch gekennzeichnet, dass** für ein Zeitduplex-TDD-System das n gemäß dem Zeitschlitz TS-Konfigurationstyp des TDD-Systems eingestellt wird.

8. Verfahren nach Anspruch 5, **dadurch gekennzeichnet, dass** das UE den PDCCH in einem gemeinsamen Suchraum des PDCCH durchsucht.

9. Basisstation, umfassend:
ein Sendemodul (401) zum Senden eines PDCCH-Signals (Physical Downlink Control Channel), das **dadurch gekennzeichnet ist, dass**:
das PDCCH-Signal Identifizierungsinformationen, die einer Vielzahl von Benutzergeräten, UEs, entsprechen, und eine Vielzahl von Teilen von Anzeigeinformationen, die der Vielzahl von UEs entsprechen, trägt, wobei jede der Vielzahl von Teilen von Anzeigeinformationen zum Anweisen, ob das entsprechende UE zum Senden des SRS erforderlich ist, dient und die Identifikationsinformation, die der Vielzahl von UEs entspricht, eine temporäre Kennung des SRS-Funknetzwerks ist,
jede der Vielzahl von Anzeigeinformationen, die der Vielzahl von UEs entsprechen, eine 1-Bit-Anzeige ist.

10. Basisstation nach Anspruch 9, **dadurch gekennzeichnet, dass** das Sendemodul (401) speziell zum Senden des PDCCH-Signals in einem gemeinsamen Suchraum des PDCCH angepasst ist.

11. Basisstation nach Anspruch 9, ferner umfassend:
ein Ressourcenreservierungsmodul (402), das vor dem Senden des PDCCH-Signals durch das Sendemodul (401) eine Ressource zum Senden des SRS für jede der Vielzahl von UEs reserviert.

12. Basisstation nach einem der Ansprüche 9 bis 11, **dadurch gekennzeichnet, dass** das PDCCH-Signal SRS-Konfigurationsparameter trägt.

13. Benutzergerät, UE, **dadurch gekennzeichnet, dass** das UE umfasst:
ein Empfangsmodul (501) zum Empfangen durch das UE eines physischen Downlink-Steuerkanal, PDCCH, -Signals, wobei der PDCCH Identifikationsinformationen trägt, die einer Vielzahl von Benutzergeräten, UEs, die das UE umfassen, entsprechen und das PDCCH-Signal eine Vielzahl von Teilen von Anzeigeinformationen, die der Vielzahl von UEs entsprechen und Anzeigeinformationen enthalten, die dem UE entsprechen, umfasst, wobei jede der Vielzahl von Teilen von Anzeigeinformationen zum Anweisen dient, ob das entsprechende UE zum Senden des SRS erforderlich ist, und die Identifizierungsinformation eine temporäre Kennung des SRS-Funknetzwerks ist; und
ein Sendemodul (502) zum Senden des SRS durch das UE gemäß vorkonfigurierten SRS-Sendekonfigurationsinformationen, wenn die dem UE entsprechenden Anzeigeinformationen das UE anweisen, das SRS zu senden,
wobei jedes der Vielzahl von Teilen von Anzeigeinformationen eine 1-Bit-Anzeige ist.

14. Benutzergerät, UE, nach Anspruch 13, **dadurch gekennzeichnet, dass** das Sendemodul (502) speziell zum Senden des SRS durch den n-ten Teilrahmen nach Empfang der Teilrahmen des PDCCH-Signals angepasst ist, wobei n ein Standardwert ist.

## Revendications

1. Méthode pour déclencher l'envoi d'un signal de référence de sondage, SRS, comprenant :
envoyer (102), par une station de base, un signal de canal physique de contrôle de liaison descendante, PDCCH,
**caractérisée en ce que**,
le signal de PDCCH véhicule une information d'identifiant correspondant à une pluralité d'équipements utilisateur, UE, et véhicule une pluralité d'éléments d'information d'indication correspondant à la pluralité d'UE, dans laquelle chacun de la pluralité d'éléments d'information d'indication est pour donner une consigne de si l'UE correspondant doit envoyer le SRS, et l'information d'identifiant est un identifiant temporaire de réseau radio de SRS,
chacun de la pluralité d'éléments d'information d'indication correspondant à la pluralité d'UE est une indication de 1 bit.

2. Méthode de la revendication 1, **caractérisée en ce que** la station de base envoie le signal de PDCCH dans un espace de recherche commun du PDCCH.

3. Méthode de la revendication 1, **caractérisée en ce que**, avant d'envoyer le signal de PDCCH, la station de base réserve une ressource pour envoyer le SRS pour chacun de la pluralité d'UE.

4. Méthode de l'une quelconque de la revendication 1 ou 3, **caractérisée en ce que** le signal de PDCCH véhicule également des paramètres de configuration de SRS.

5. Méthode pour envoyer un signal de référence de sondage, SRS, **caractérisée en ce que** la méthode comprend
recevoir un signal de canal physique de contrôle de liaison descendante, PDCCH, par un équipements utilisateur, UE, dans laquelle le signal de PDCCH véhicule une information d'identifiant correspondant à une pluralité d'équipements utilisateur, UE, comprenant l'UE, et le signal de PDCCH véhicule une pluralité d'éléments d'information d'indication correspondant à la pluralité d'UE, et contenant une information d'indication correspondant à l'UE, dans laquelle chacun de la pluralité d'éléments d'information d'indication est pour donner une consigne de si l'UE correspondant doit envoyer le SRS, et l'information d'identifiant est un identifiant temporaire de réseau radio de SRS ; et
si l'information d'indication correspondant à l'UE donne une consigne à l'UE d'envoyer le SRS, envoyer (106), par l'UE, le SRS selon une information de configuration d'envoi de SRS préconfigurée,
dans laquelle chacun de la pluralité d'éléments d'information d'indication est une indication de 1 bit.

6. Méthode de la revendication 5, **caractérisée en ce que** l'UE envoie le SRS à travers l'énième sous-trame après avoir reçu les sous-trames du signal de PDCCH, dans laquelle le n est une valeur par défaut.

7. Méthode de la revendication 6, **caractérisée en ce que**, pour un système de duplexage par répartition temporelle, TDD, le n est fixé selon les types de configuration de créneau temporel, TS, du système TDD.

8. Méthode de la revendication 5, **caractérisée en ce que** l'UE recherche le PDCCH dans un espace de recherche commun du PDCCH.

9. Station de base, comprenant :
un module d'envoi (401), pour envoyer un signal de canal physique de contrôle de liaison descendante, PDCCH, **caractérisée en ce que**
le signal de PDCCH véhicule une information d'identifiant correspondant à une pluralité d'équipements utilisateur, UE, et véhicule une pluralité d'éléments d'information d'indication correspondant à la pluralité d'UE, dans laquelle chacun de la pluralité d'éléments d'information d'indication est pour donner une consigne de si l'UE correspondant doit envoyer le SRS, et l'information d'identifiant correspondant à la pluralité d'UE est un identifiant temporaire de réseau radio de SRS,
chacun de la pluralité d'éléments d'information d'indication correspondant à la pluralité d'UE est une indication de 1 bit.

10. Station de base de la revendication 9, **caractérisée en ce que** le module d'envoi (401) est spécifiquement adapté pour envoyer le signal de PDCCH dans un espace de recherche commun du PDCCH.

11. Station de base de la revendication 9, comprenant en outre :
un module de réservation de ressource (402), pour, avant que le module d'envoi (401) envoie le signal de PDCCH, réserver une ressource pour envoyer le SRS pour chacun de la pluralité d'UE.

12. Station de base de l'une quelconque des revendications 9-11, **caractérisée en ce que** le signal de PDCCH véhicule des paramètres de configuration de SRS.

13. Équipement utilisateur, UE, **caractérisé en ce que** l'UE comprend :
un module de réception (501), pour recevoir un signal de canal physique de contrôle de liaison descendante, PDCCH, par un équipements utilisateur, UE, dans lequel le PDCCH véhicule une information d'identifiant correspondant à une pluralité d'équipements utilisateur, UE, comprenant l'UE, et le signal de PDCCH véhicule une pluralité d'éléments d'information d'indication correspondant à la pluralité d'UE, et contenant une information d'indication correspondant à l'UE, dans lequel chacun de la pluralité d'éléments d'information d'indication est pour donner une consigne de si l'UE correspondant doit envoyer le SRS, et l'information d'identifiant est un identifiant temporaire de réseau radio de SRS ; et
un module d'envoi (502), pour envoyer, par l'UE, le SRS selon une information de configuration d'envoi de SRS si l'information d'indication correspondant à l'UE donne une consigne à l'UE d'envoyer le SRS,
dans lequel chacun de la pluralité d'éléments d' information d'indication est une indication de 1 bit.

14. UE de la revendication 13, **caractérisé en ce que** le module d'envoi (502) est spécifiquement adapté pour envoyer le SRS à travers l'énième sous-trame après avoir reçu les sous-trames du signal de PDCCH, dans lequel le n est une valeur par défaut.
